# EUROPEAN PATENT APPLICATION

(11) **EP 3 076 716 A1**
(43) Date of publication of application: **05.10.2016**
(21) Application number: 16159510.3
(22) Date of filing: 09.03.2016
(51) Int. Cl.: H04W 48/16, H04W 48/20

(54) **METHOD AND APPARATUS FOR NETWORK ACCESS**

(30) Priority: 30.03.2015 CN 201510146243
(71) Applicant: Xiaomi Inc., Beijing 100085 (CN)
(72) Inventor: ZHANG, Yanlu, Beijing Beijing 100085 (CN); HOU, Enxing, Beijing Beijing 100085 (CN); GAO, Ziguang, Beijing Beijing 100085 (CN)
(74) Representative: Sackin, Robert

(57) **Abstract**

The present disclosure relates to a method and an apparatus for network access. The method includes: when the smart device has not accessed any network, establishing (S11) a wireless local area network; when detecting that there is a terminal accessing the wireless area local network, sending (S12) a network access request to the terminal; receiving (S13) network configuration information sent by the terminal; and accessing (S14) a network according to the network configuration information. The present disclosure is used for enabling a smart device to access a network.

## Description

### TECHNICAL FIELD

The present disclosure generally relates to the technical field of wireless communication, and more particularly, to a method and an apparatus for network access.

### BACKGROUND

At present, a plurality of smart devices having a network access function have emerged, such as a TV box, a smart socket, a smart air purifier, a mobile router, and the like. These devices may access a network, and however, because these devices do not have an input interface, when these devices access a network for the first time, a user needs to send a service set identifier (SSID) and an access password of a router to be accessed to these smart devices via other devices having an input interface such as a mobile phone or a computer and the like, so as to help these smart devices access the network.

### SUMMARY

Embodiments of the present disclosure provide a method and an apparatus for network access.

According to a first aspect of embodiments of the present disclosure, there is provided a method for network access. The method is applied in a smart device and includes:
when the smart device has not accessed any network, establishing a wireless local area network;
when detecting that there is a terminal accessing the wireless area local network, sending a network access request to the terminal;
receiving network configuration information sent by the terminal; and
accessing a network according to the network configuration information.

Optionally, the establishing a wireless local area network includes:
setting the smart device as a wireless access point mode; and
establishing the wireless local area network using the smart device itself as a wireless access point.

Optionally, when detecting that there is a terminal accessing the wireless local area network, the method further includes:
sending authentication information to the terminal, so that the terminal performs identification authentication on the smart device according to the authentication information, and when identification of the smart device is authenticated by the terminal, the terminal sends the network configuration information to the smart device.

Optionally, the accessing a network according to the network configuration information, includes:
performing network configuration on the smart device according to the network configuration information; and
after the network configuration is completed, sending an access request to a network access device corresponding to the network configuration information so as to access the network.

Optionally, after the network configuration is completed, the method further includes:
reporting a configuration result to the terminal.

Optionally, after the smart device accesses the network, the method further includes:
reporting a network access result to the terminal.

According to a second aspect of embodiments of the present disclosure, there is provided a method for network access. The method is applied in a terminal and includes:
when detecting a wireless local area network established by a smart device, accessing the wireless local area network;
receiving a network access request sent by the smart device;
according to the network access request, obtaining network configuration information for the terminal itself to access a network; and
sending the network configuration information to the smart device.

Optionally, after receiving the network access request sent by the smart device, the method further includes:
receiving authentication information sent by the smart device;
performing identification authentication on the smart device according to the authentication information; and
when identification of the smart device is authenticated, sending the network configuration information to the smart device.

Optionally, before sending the network configuration information to the smart device, the method further includes:
receiving a configuration instruction sent by a user; and
determining whether to send the network configuration information according to the configuration instruction.

Optionally, the method further includes:
receiving at least one of the following pieces of information from the smart device:
a configuration result of network configuration performed by the smart device according to the network configuration information, and a network access result of network access of the smart device.

According to a third aspect of embodiments of the present disclosure, there is provided an apparatus for network access. The apparatus is applied in a smart device and includes:
an establishing module configured to, when the smart device has not accessed any network, establish a wireless local area network;
a sending module configured to, when it is detected that there is a terminal accessing the wireless area local network, send a network access request to the terminal;
a receiving module configured to receive network configuration information sent by the terminal; and
an accessing module configured to access a network according to the network configuration information.

Optionally, the establishing module includes:
a setting submodule configured to set the smart device as a wireless access point mode; and
an establishing submodule configured to establish the wireless local area network using the smart device itself as a wireless access point.

Optionally, the sending module is further configured to, when it is detected that there is a terminal accessing the wireless local area network, send authentication information to the terminal, so that the terminal performs identification authentication on the smart device according to the authentication information, and when identification of the smart device is authenticated by the terminal, the terminal sends the network configuration information to the smart device.

Optionally, the accessing module includes:
a configuration submodule configured to perform network configuration on the smart device according to the network configuration information; and
a sending submodule configured to, after the network configuration is completed, send an access request to a network access device corresponding to the network configuration information so as to access the network.

Optionally, the sending module is further configured to report a configuration result to the terminal after the network configuration is completed.

Optionally, the sending module is further configured to report a network access result to the terminal after the smart device accesses the network.

According to a fourth aspect of embodiments of the present disclosure, there is provided an apparatus for network access. The apparatus is applied in a terminal and includes:
an accessing module configured to, when a wireless local area network established by a smart device is detected, access the wireless local area network;
a receiving module configured to receive a network access request sent by the smart device;
an obtaining module configured to, according to the network access request, obtain network configuration information for the terminal itself to access a network; and
a sending module configured to send the network configuration information to the smart device.

Optionally, the apparatus further includes an authentication module;
wherein the receiving module is configured to receive authentication information sent by the smart device after receiving the network access request sent by the smart device;
wherein the authentication module is configured to perform identification authentication on the smart device according to the authentication information; and
wherein the sending module is configured to, when identification of the smart device is authenticated, send the network configuration information to the smart device.

Optionally, the apparatus further includes a determining module;
wherein the receiving module is configured to receive a configuration instruction sent by a user; and
wherein the determining module is configured to determine whether to send the network configuration information according to the configuration instruction.

Optionally, the receiving module is configured to receive at least one of the following pieces of information from the smart device:
a configuration result of network configuration performed by the smart device according to the network configuration information, and a network access result of network access of the smart device.

According to a fifth aspect of embodiments of the present disclosure, there is provided a smart device, including:
a processor; and
a memory for storing instructions executable by the processor;
wherein the processor is configured to perform:
when the smart device has not accessed any network, establishing a wireless local area network;
when detecting that there is a terminal accessing the wireless area local network, sending a network access request to the terminal;
receiving network configuration information sent by the terminal; and
accessing a network according to the network configuration information.

According to a sixth aspect of embodiments of the present disclosure, there is provided a terminal, including:
a processor; and
a memory for storing instructions executable by the processor;
wherein the processor is configured to perform:
when detecting a wireless local area network established by a smart device, accessing the wireless local area network;
receiving a network access request sent by the smart device;
according to the network access request, obtaining network configuration information for the terminal itself to access a network; and
sending the network configuration information to the smart device.

According to a seventh aspect of the embodiment of the present disclosure, there is provided a computer program which, when being executed on a processor of a smart device or terminal, performs any of the above methods.

The technical solutions provided by embodiments of the present disclosure may have the following advantageous effects:

For a smart device having a network access function such as a TV box, a smart socket, a smart air purifier or a mobile router and the like, when the smart device has not accessed any network, a local area network is established. When a user selects to join the local area network via a terminal having an input interface such as a mobile phone or a computer and the like, the smart device sends a network access request to the terminal accessing the local area network. If the user allows this request, the terminal sends the network configuration information of the network which the terminal currently accesses to the smart devices via the local area network so that the smart device may access the network according to the network configuration information. Thus, the smart device obtains the network configuration information on its own initiative, no manual input by a user is required, and thereby the accuracy for the smart device obtaining the network configuration information is improved. Consequently, reliability and success ratio for a device accessing a router are improved.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for network access according to an exemplary embodiment.
Fig. 2 is a flowchart showing a method for network access according to another exemplary embodiment.
Fig. 3 is a flowchart showing a method for network access according to another exemplary embodiment.
Fig. 4 is a flowchart showing a method for network access according to another exemplary embodiment.
Fig. 5 is a flowchart showing a method for network access according to another exemplary embodiment.
Fig. 6 is a block diagram showing an apparatus for network access according to another exemplary embodiment.
Fig. 7 is a block diagram showing an establishing module according to another exemplary embodiment.
Fig. 8 is a block diagram showing an accessing module according to another exemplary embodiment.
Fig. 9 is a block diagram showing an apparatus for network access according to another exemplary embodiment.
Fig. 10 is a block diagram showing an apparatus for network access according to another exemplary embodiment.
Fig. 11 is a block diagram showing an apparatus for network access according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

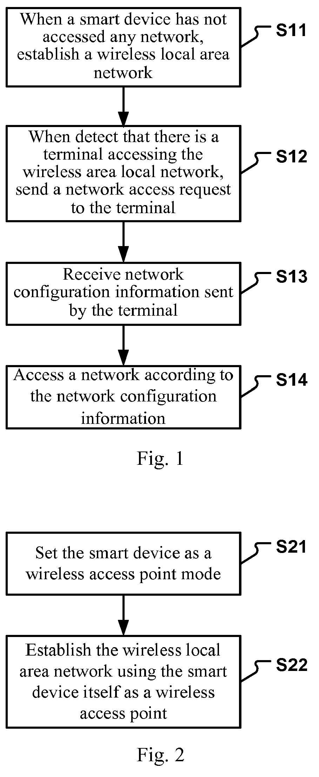

Fig. 1 is a flowchart showing a method for network access according to an exemplary embodiment. As shown in Fig. 1, the method for network access is applied in a smart device and includes the following steps.

In step S11, when the smart device has not accessed any network, a wireless local area network is established.

In step S12, when that there is a terminal accessing the wireless area local network is detected, a network access request is sent to the terminal.

In step S13, network configuration information sent by the terminal is received.

In step S14, a network is accessed according to the network configuration information.

In the embodiment, for a smart device having a network access function such as a TV box, a smart socket, a smart air purifier or a mobile router and the like, when the smart device has not accessed any network, a local area network is established. When a user selects to join the local area network via a terminal having an input interface such as a mobile phone or a computer and the like, the smart device sends a network access request to the terminal accessing the local area network. If the user allows this request, the terminal sends the network configuration information (such as a SSID and an access password of a router to be accessed) of the network which the terminal currently accesses to the smart devices via the local area network so that the smart device may access the network according to the network configuration information. Thus, the smart device obtains the network configuration information on its own initiative, no manual input by a user is required, and thereby the accuracy for the smart device obtaining the network configuration information is improved. Consequently, reliability and success ratio for a device accessing a router are improved.

Fig. 2 is a flowchart showing a method for network access according to another exemplary embodiment. As shown in Fig. 2, optionally, step S11 includes:
In step S21, the smart device is set as a wireless access point mode.

In step S22, the wireless local area network is established using the smart device itself as a wireless access point.

In an optional solution, the smart device may enter into a wireless access point (AP) mode and establish a wireless local area network using itself as a wireless access point. Thus, the terminal may access the wireless local area network, and then the smart device may obtain the network configuration information of the terminal to access the network.

Optionally, when detecting that there is a terminal accessing the wireless local area network, the method further includes:

sending authentication information to the terminal, so that the terminal performs identification authentication on the smart device according to the authentication information, and when identification of the smart device is authenticated by the terminal, the terminal sends the network configuration information to the smart device.

In an optional solution, the smart device sends authentication information including device information of the smart device to the terminal, and the terminal sends the network configuration information of itself to the smart device after the terminal authenticates the identification of the smart device. Thus, the security of information of the terminal and thereby the security of the network are guaranteed.

For example, a mobile phone of a user may access a wireless local area network established by a smart device A at the user's home. By performing identification authentication on the device information of the smart device A, the user may find that the smart device A is a device in his/her home, and the mobile phone sends the network configuration information for accessing a router R in his/her home to the smart device A, and the smart device A accesses the router R according to the network configuration information.

The mobile phone also accesses a wireless local area network established by another smart device B, but the user finds, according to device information of the smart device B, that the smart device B is not a device in his/her home, and thus the mobile phone does not send the network configuration information of the router R in his/her home to the smart device B.

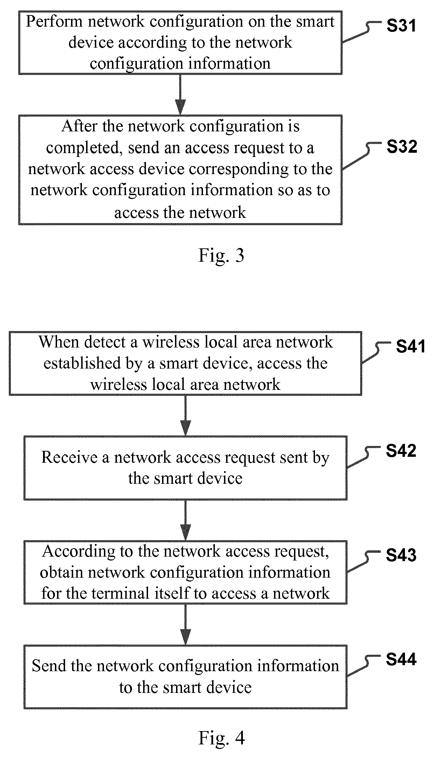

Fig. 3 is a flowchart showing a method for network access according to another exemplary embodiment. As shown in Fig. 3, optionally, step S14 may include:

In step S31, network configuration is performed on the smart device according to the network configuration information.

In step S32, after the network configuration is completed, an access request is sent to a network access device corresponding to the network configuration information so as to access the network.

In an optional solution, the smart device configures itself according to received network configuration information, and after the configuration is completed, the smart device sends the access request to the router to access the Internet.

Optionally, after the network configuration is completed, the method further includes:
reporting a configuration result to the terminal.

Optionally, after the smart device accesses the network, the method further includes:
reporting a network access result to the terminal.

In an optional solution, after the network configuration is completed, the smart device reports a configuration result to the terminal; after accessing the network, the smart device reports a network access result to the terminal. Thus, the user may know the state of the smart device during the network access via the terminal, and once a problem occurs, the user may know which step in the network access is wrong, and thus the user may quickly correct the error, for example, modifying the network configuration or resending an access request to the router and the like.

Fig. 4 is a flowchart showing a method for network access according to an exemplary embodiment. As shown in Fig. 4, the method for network access is applied in a terminal and includes the following steps.

In step S41, when a wireless local area network established by a smart device is detected, the wireless local area network is accessed.

In step S42, a network access request sent by the smart device is received.

In step S43, according to the network access request, network configuration information for the terminal itself to access a network is obtained.

In step S44, the network configuration information is sent to the smart device.

In the embodiment, when a terminal detects a wireless local area network established by a smart device, by accessing the local area network and sending the network configuration information of the terminal itself to the smart device via the local area network, the smart device may access the network using the network configuration of the terminal. Thus, the smart device obtains the network configuration information on its own initiative, no manual input by a user is required, and thereby the accuracy for the smart device obtaining the network configuration information is improved. Consequently, reliability and success ratio for a device accessing a router are improved.

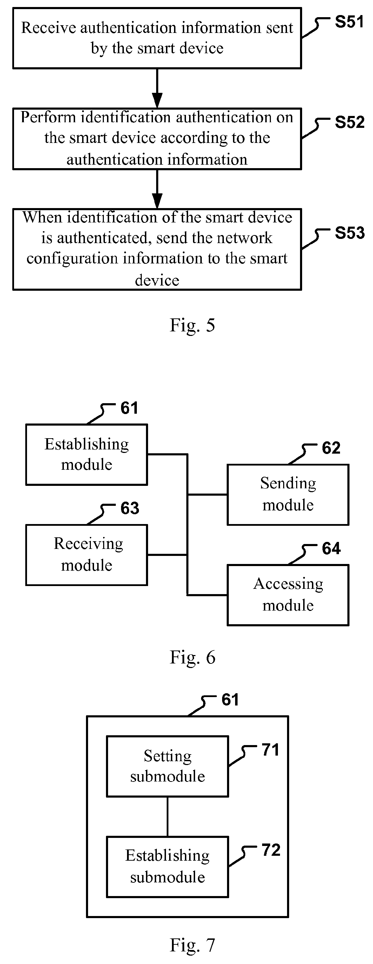

Fig. 5 is a flowchart showing a method for network access according to another exemplary embodiment. As shown in Fig. 5, optionally, after step S42, the method further includes:
In step S51, authentication information sent by the smart device is received.

In step S52, identification authentication is performed on the smart device according to the authentication information.

In step S53, when identification of the smart device is authenticated, the network configuration information is sent to the smart device.

In an optional solution, a terminal performs identification authentication on a smart device, and after the identification of the smart device is authenticated, the terminal sends the network configuration information of itself to the smart device. Thus, the security of the terminal information and thereby the security of the network are guaranteed.

Optionally, before step S44, the method further includes:
In step A1, a configuration instruction sent by a user is received.

In step A2, whether to send the network configuration information is determined according to the configuration instruction.

In an optional solution, a user may select whether to send the network configuration information to a smart device via a terminal. Thus, the security of the terminal information and the security of the network are further enhanced.

Optionally, the method further includes receiving at least one of the following pieces of information from the smart device:
a configuration result of network configuration performed by the smart device according to the network configuration information, and a network access result of network access of the smart device.

In an optional solution, after the network configuration is completed, the smart device reports a configuration result to a terminal; after accessing the network, the smart device reports a network access result to the terminal. Thus, the user may know the state of the smart device during the network access via the terminal, and once a problem occurs, the user may know which step in the network access is wrong, and thus the user may quickly correct the error, for example, modifying the network configuration or resending an access request to the router and the like.

Fig. 6 is a block diagram showing an apparatus for network access according to an exemplary embodiment. As shown in Fig. 6, the apparatus is applied in a smart device and includes an establishing module 61, a sending module 62, a receiving module 63 and an accessing module 64.

The establishing module 61 is configured to, when the smart device has not accessed any network, establish a wireless local area network.

The sending module 62 is configured to, when it is detected that there is a terminal accessing the wireless area local network, send a network access request to the terminal.

The receiving module 63 is configured to receive network configuration information sent by the terminal.

The accessing module 64 is configured to access a network according to the network configuration information.

Fig. 7 is a block diagram showing an establishing module according to an exemplary embodiment. As shown in Fig. 7, optionally, the establishing module 61 includes:
a setting submodule 71 configured to set the smart device as a wireless access point mode; and
an establishing submodule 72 configured to establish the wireless local area network using the smart device itself as a wireless access point.

Optionally, the sending module 62 is further configured to, when it is detected that there is a terminal accessing the wireless local area network, send authentication information to the terminal, so that the terminal performs identification authentication on the smart device according to the authentication information, and when identification of the smart device is authenticated by the terminal, the terminal sends the network configuration information to the smart device.

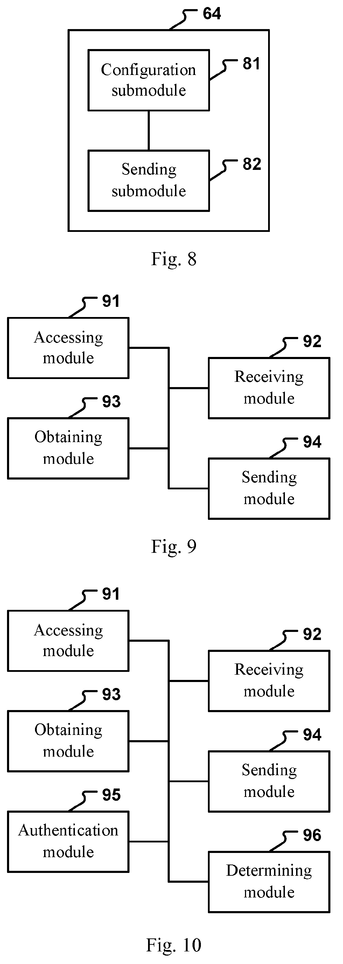

Fig. 8 is a block diagram showing an accessing module according to an exemplary embodiment. As shown in Fig. 8, optionally, the accessing module 64 includes:
a configuration submodule 81 configured to perform network configuration on the smart device according to the network configuration information; and
a sending submodule 82 configured to, after the network configuration is completed, send an access request to a network access device corresponding to the network configuration information so as to access the network.

Optionally, the sending module 62 is further configured to report a configuration result to the terminal after the network configuration is completed.

Optionally, the sending module 62 is further configured to report a network access result to the terminal after the smart device accesses the network.

Fig. 9 is a block diagram showing an apparatus for network access according to an exemplary embodiment. As shown in Fig. 9, the apparatus is applied in a terminal and includes:
an accessing module 91 configured to, when a wireless local area network established by a smart device is detected, access the wireless local area network;
a receiving module 92 configured to receive a network access request sent by the smart device;
an obtaining module 93 configured to, according to the network access request, obtain network configuration information for the terminal itself to access a network; and
a sending module 94 configured to send the network configuration information to the smart device.

Fig. 10 is a block diagram showing an apparatus for network access according to an exemplary embodiment. As shown in Fig. 10, optionally, the apparatus further includes an authentication module 95.

The receiving module 91 is configured to receive authentication information sent by the smart device after receiving the network access request sent by the smart device.

The authentication module 95 is configured to perform identification authentication on the smart device according to the authentication information.

The sending module 94 is configured to, when identification of the smart device is authenticated, send the network configuration information to the smart device.

As shown in Fig. 10, optionally, the apparatus further includes a determining module 96.

The receiving module 91 is configured to receive a configuration instruction sent by a user.

The determining module 96 is configured to determine whether to send the network configuration information according to the configuration instruction.

Optionally, the receiving module 92 is configured to receive at least one of the following pieces of information from the smart device:
a configuration result of network configuration performed by the smart device according to the network configuration information, and a network access result of network access of the smart device.

For the embodiments of the apparatus, detailed manners for respective modules performing functions have been described in detail in embodiments of method and thus detailed description is omitted.

The present disclosure further provides a smart device including:
a processor; and
a memory for storing instructions executable by the processor;
wherein the processor is configured to perform:
when the smart device has not accessed any network, establishing a wireless local area network;
when detecting that there is a terminal accessing the wireless area local network, sending a network access request to the terminal;
receiving network configuration information sent by the terminal; and
accessing a network according to the network configuration information.

The present disclosure further provides a terminal including:
a processor; and
a memory for storing instructions executable by the processor;
wherein the processor is configured to perform:
when detecting a wireless local area network established by a smart device, accessing the wireless local area network;
receiving a network access request sent by the smart device;
according to the network access request, obtaining network configuration information for the terminal itself to access a network; and
sending the network configuration information to the smart device.

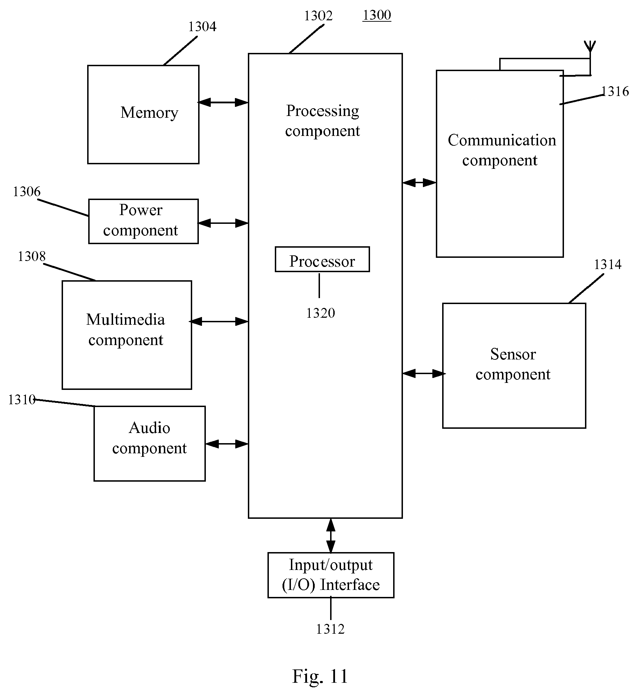

Fig. 11 is a block diagram of an apparatus for network access according to an exemplary embodiment. For example, the apparatus 1300 may be a mobile phone, a computer, a digital broadcast terminal, a messaging device, a gaming console, a tablet, a medical device, exercise equipment, a personal digital assistant, and the like.

Referring to Fig. 11, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the apparatus 1300. Examples of such data include instructions for any applications or methods operated on the apparatus 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the apparatus 1300. The power component 1306 may include a power management system, one or more power sources, and any other components associated with the generation, management, and distribution of power in the apparatus 1300.

The multimedia component 1308 includes a screen providing an output interface between the apparatus 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the apparatus 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the apparatus 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad, of the apparatus 1300, a change in position of the apparatus 1300 or a component of the apparatus 1300, a presence or absence of user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the apparatus 1300 and other devices. The apparatus 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1320 in the apparatus 1300, for performing the above-described methods. For example, the non-transitory computer-readable storage medium may be a ROM, a RAM, a CD-ROM, a magnetic tape, a floppy disc, an optical data storage device, and the like.

The present disclosure provides a non-transitory computer-readable storage medium, when the instructions stored in the storage medium are executed by a processor of a smart device, the instructions stored in the storage medium causes the smart device to perform a method for network access, the method including:
when the smart device has not accessed any network, establishing a wireless local area network;
when detecting that there is a terminal accessing the wireless area local network, sending a network access request to the terminal;
receiving network configuration information sent by the terminal; and
accessing a network according to the network configuration information.

Optionally, the establishing a wireless local area network includes:
setting the smart device as a wireless access point mode; and
establishing the wireless local area network using the smart device itself as a wireless access point.

Optionally, when detecting that there is a terminal accessing the wireless local area network, the method further includes:
sending authentication information to the terminal, so that the terminal performs identification authentication on the smart device according to the authentication information, and when identification of the smart device is authenticated by the terminal, the terminal sends the network configuration information to the smart device.

Optionally, the accessing a network according to the network configuration information, includes:
performing network configuration on the smart device according to the network configuration information; and
after the network configuration is completed, sending an access request to a network access device corresponding to the network configuration information so as to access the network.

Optionally, after the network configuration is completed, the method further includes:
reporting a configuration result to the terminal.

Optionally, after the smart device accesses the network, the method further includes:
reporting a network access result to the terminal.

The present disclosure provides a non-transitory computer-readable storage medium, when the instructions stored in the storage medium are executed by a processor of a mobile terminal, the instructions stored in the storage medium causes the mobile terminal to perform a method for network access, the method including:
when detecting a wireless local area network established by a smart device, accessing the wireless local area network;
receiving a network access request sent by the smart device;
according to the network access request, obtaining network configuration information for the terminal itself to access a network; and
sending the network configuration information to the smart device.

Optionally, after receiving the network access request sent by the smart device, the method further includes:
receiving authentication information sent by the smart device;
performing identification authentication on the smart device according to the authentication information; and
when identification of the smart device is authenticated, sending the network configuration information to the smart device.

Optionally, before sending the network configuration information to the smart device, the method further includes:
receiving a configuration instruction sent by a user; and
determining whether to send the network configuration information according to the configuration instruction.

Optionally, the method further includes:
receiving at least one of the following pieces of information from the smart device:
a configuration result of network configuration performed by the smart device according to the network configuration information, and a network access result of network access of the smart device.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present only be limited by the appended claims.

## Claims

1. A method for network access, wherein the method is applied in a smart device and comprises:
when the smart device has not accessed any network, establishing (S11) a wireless local area network;
when detecting that there is a terminal accessing the wireless area local network, sending (S12) a network access request to the terminal;
receiving (S13) network configuration information sent by the terminal; and
accessing (S14) a network according to the network configuration information.

2. The method according to claim 1, wherein the establishing (S11) a wireless local area network comprises:
setting (S21) the smart device as a wireless access point mode; and
establishing (S22) the wireless local area network using the smart device itself as a wireless access point.

3. The method according to claim 1 or 2, wherein when detecting that there is a terminal accessing the wireless local area network, the method further comprises:
sending authentication information to the terminal, so that the terminal performs identification authentication on the smart device according to the authentication information, and when identification of the smart device is authenticated by the terminal, the terminal sends the network configuration information to the smart device.

4. The method according to any preceding claim, wherein the accessing (S14) a network according to the network configuration information, comprises:
performing (S31) network configuration on the smart device according to the network configuration information; and
after the network configuration is completed, sending (S32) an access request to a network access device corresponding to the network configuration information so as to access the network.

5. The method according to claim 4, wherein after the network configuration is completed, the method further comprises:
reporting a configuration result to the terminal.

6. The method according to claim 4 or 5, wherein after the smart device accesses the network, the method further comprises:
reporting a network access result to the terminal.

7. A method for network access, wherein the method is applied in a terminal and comprises:
when detecting a wireless local area network established by a smart device, accessing (S41) the wireless local area network;
receiving (S42) a network access request sent by the smart device;
according to the network access request, obtaining (S43) network configuration information for the terminal itself to access a network; and
sending (S44) the network configuration information to the smart device.

8. The method according to claim 7, wherein after receiving (S42) the network access request sent by the smart device, the method further comprises:
receiving (S51) authentication information sent by the smart device;
performing (S52) identification authentication on the smart device according to the authentication information; and
when identification of the smart device is authenticated, sending (S53) the network configuration information to the smart device.

9. The method according to claim 7 or 8, wherein before sending (S44) the network configuration information to the smart device, the method further comprises:
receiving (A1) a configuration instruction sent by a user; and
determining (A2)whether to send the network configuration information according to the configuration instruction.

10. The method according to any of claims 7 to 9, further comprising:
receiving at least one of the following pieces of information from the smart device:
a configuration result of network configuration performed by the smart device according to the network configuration information, and a network access result of network access of the smart device.

11. An apparatus for network access, wherein the apparatus is applied in a smart device and comprises:
an establishing module (61) configured to, when the smart device has not accessed any network, establish a wireless local area network;
a sending module (62) configured to, when it is detected that there is a terminal accessing the wireless area local network, send a network access request to the terminal;
a receiving module (63) configured to receive network configuration information sent by the terminal; and
an accessing module (64) configured to access a network according to the network configuration information.

12. The apparatus according to claim 11, wherein the establishing module (61) comprises:
a setting submodule (71) configured to set the smart device as a wireless access point mode; and
an establishing submodule (72) configured to establish the wireless local area network using the smart device itself as a wireless access point.

13. An apparatus for network access, wherein the apparatus is applied in a terminal and comprises:
an accessing module (91) configured to, when a wireless local area network established by a smart device is detected, access the wireless local area network;
a receiving module (92) configured to receive a network access request sent by the smart device;
an obtaining module (93) configured to, according to the network access request, obtain network configuration information for the terminal itself to access a network; and
a sending module (94) configured to send the network configuration information to the smart device.

14. A smart device, comprising:
a processor; and
a memory for storing instructions executable by the processor;
wherein the processor is configured to perform:
when the smart device has not accessed any network, establishing a wireless local area network;
when detecting that there is a terminal accessing the wireless area local network, sending a network access request to the terminal;
receiving network configuration information sent by the terminal; and
accessing a network according to the network configuration information.

15. A terminal, comprising:
a processor; and
a memory for storing instructions executable by the processor;
wherein the processor is configured to perform:
when detecting a wireless local area network established by a smart device, accessing the wireless local area network;
receiving a network access request sent by the smart device;
according to the network access request, obtaining network configuration information for the terminal itself to access a network; and
sending the network configuration information to the smart device.
